# EUROPEAN PATENT SPECIFICATION

(11) **EP 1 703 492 B1**
(45) Date of publication and mention of the grant of the patent: **09.05.2007**
(21) Application number: 05102059.2
(22) Date of filing: 16.03.2005
(51) Int. Cl.: G10L 13/04, G10L 19/00

(54) **System and method for personalised text-to-voice synthesis**
Verfahren und System zur Personalisierung von Text-zu-Sprache Umsetzung
Sytème et méthode pour la personnalisation de la synthèse texte vers voix

(43) Date of publication of application: 20.09.2006
(73) Proprietor: Research In Motion Limited, Waterloo, Ontario N2L 3W8 (CA)
(72) Inventor: Ng, Eric, Daly, California 94015 (US)
(74) Representative: Rickard, David John

(56) References cited:
- EP-A- 0 901 000
- EP-A- 1 168 297
- US-B1- 6 801 931

## Description

The present invention relates generally to text-to-voice synthesis and specifically to a method and system for personalizing such synthesis.

Text-to-voice synthesis technology provides the ability to convert arbitrary text into audible speech. Accordingly, this technology may be used to provide textual information to people via voice messages. These voice messages can prove especially useful in applications where audible output is a preferable form of user feedback when interacting with a communication device. For example, this feature is extremely useful when receiving text messages on the communication device while the user is driving.

With the proliferation of wireless communication devices, including personal digital assistants, smart cellular telephones, portable computers, two-way pagers and the like, the need is growing for providing the user of a wireless communication device with a means for providing textual information to people via voice messages.

However, current systems generally use a single pre-selected voice to present the voice messages for presenting all incoming text messages in an audible format. This limitation may present several issues, which are described as follows.

Presenting all incoming text messages using a single voice will likely result in a monotonous tone for the voice message. Accordingly, it may be difficult for the user of the device user (referred to as "the user") to properly interpret the message the first time it is heard. Further, it may be difficult for the device user to focus on the message, which may cause the device user to subconsciously ignore portions of the message. Therefore, the purpose or idea behind the message may not be properly interpreted.

Additionally, the device user may confuse content from different messages. Since a single voice presents different voice messages, there is no easy way for the device user to distinguish between different messages.

Also, the sender's personality is not represented vocally. For example, an email from a quick and anxious person is typically presented in the monotonous and is not distinguishable from a message received from a person who is soft and calm.

[0007a] US6801931 discloses a system and method for transmitting e-mail messages along with voice information of the sender or other speaker to a receiver terminal. The method includes defining a set of basis vectors associated with a human voice and attaching the vectors to the message payload of the text message. The combined message payload and attached set of basis vectors are then transmitted through a communications network. The message including the voice model defined by the basis vectors is then processed such that the recipient hears the text portions thereof read in the voice of the sender. However, a sender may attach basis vectors corresponding to a speaker other than him or herself.

[0007b] EP1168297 discloses a system for sending text e-mail messages which includes sending a speech synthesis template along with the text message. The template is used to synthesize the speech and generate speech which sounds like the user or one of the users, of the sending device. In some cases, the message may be sent without the speech synthesis template and the recipient device requests the template from the network or from the sender device.

[0007c] EP0901000 discloses a system for receiving text messages including e-mail messages, processing the text messages according to defined voice tone data information stored within the memory of the voice processing device and reading aloud the text message in the voice tone. Different voice tones may be ascribed to different messages such that different received messages are read aloud in a different voice tone.

[0007d] None of the foregoing references teaches transmitting voice characteristics determined as a deviation (or delta) from a predefined standard voice.

All of the above issues affect the way the user responds to the incoming message. Accordingly, the present invention may obviate or mitigate at least some of the above-mentioned disadvantages.

### GENERAL

In accordance with an aspect of the present invention such as claimed in claim 1 there is provided a communication device for audibly outputting a received text message to a user, the device comprising: means for retrieving data representing voice characteristic information associated with a sender of the text message, wherein the data representing the voice characteristic information defines the voice characteristic information as a set of voice characteristics, each of the voice characteristics representing a difference between a desired voice characteristic and a corresponding predefined voice characteristic of a standard voice; a processor for synthesizing an output voice in accordance with the voice characteristic information; and an output for audibly presenting the text message to the user using the output voice.

In accordance with a further aspect of the present invention such as claimed in claim 3 there is provided a method of audibly outputting a received text message to a user via a communication device, the text message being received from a sender, the method comprising the steps of: receiving a text message to present audibly; retrieving an output voice to present the text message, the output voice being synthesized using predefined voice characteristic information to represent the sender's voice, the predefined voice characteristic information being determined by a set of voice deltas, each of the voice deltas representing a difference between a desired voice characteristic and a corresponding predefined voice characteristic of a standard voice; and using the output voice to audibly present the text message to the user.

### BRIEF DESCRIPTION OF THE DRAWINGS

The invention will now be described by way of example only with reference to the following drawings in which:
Figure 1 is a block diagram illustrating a communication network; and
Figure 2 is a flow chart illustrating the operation of personalizing text to voice synthesis.

### DESCRIPTION OF PREFERRED EMBODIMENTS

For convenience, like numerals in the description refer to like structures in the drawings.

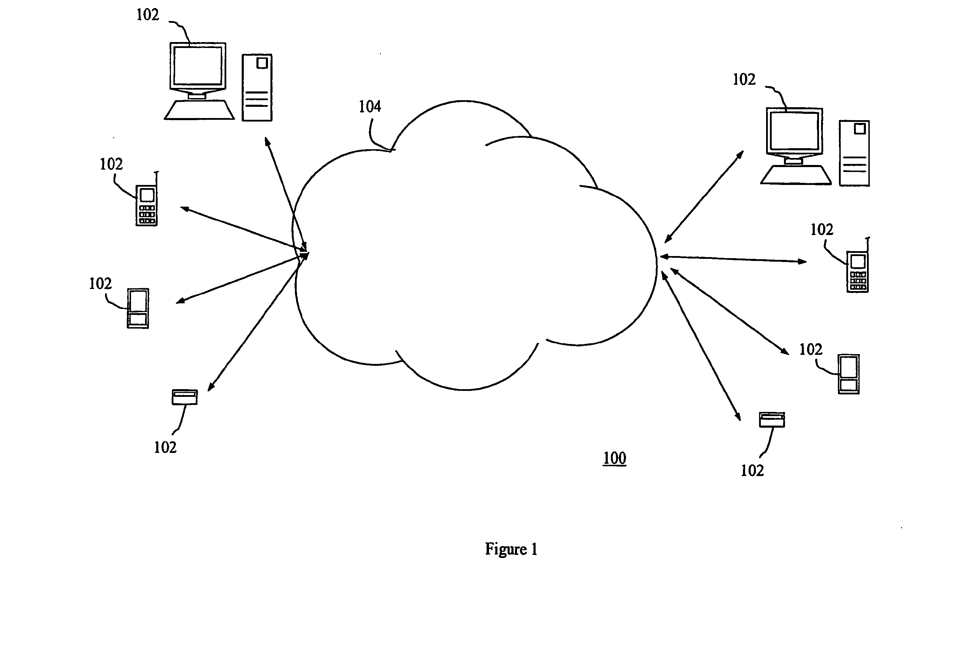

Referring to Figure 1, a communication network infrastructure is illustrated generally by numeral 100. The communication network infrastructure 100 comprises a plurality of communication devices 102 and a communication network 104.

The communication devices 102, also referred to simply as devices 102, may include any wired or wireless device such as a desktop computer, a laptop or mobile computer, a smart phone, a personal digital assistant, such as a Blackberry^{™} by Research in Motion for example, and the like. The communication devices 102 are in communication with each other via the communication network 104. Accordingly, the communication network 104 may include one or more of components including a wireless network, a relay, a Public Switched Telephone Network (PSTN), a Voice over Internet Protocol (VoIP) network, and the like.

In the present embodiment, specific voice characteristics of the sender are represented when the message is presented to the user in an audible format. Accordingly, the user will hear different voices for different messages, thereby making the message more interesting, allowing the user to more readily comprehend the message, and reducing the likelihood of confusing content between different messages.

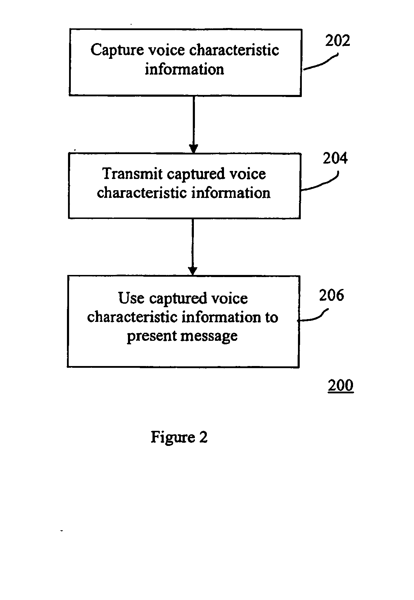

Referring to Figure 2, a flow chart illustrating the general operation of the present embodiment is represented by numeral 200. In step 202, voice characteristic information of the sender is captured. In step 204, the voice characteristic information is transmitted to the user along with the message. In step 206, the voice characteristic information is applied to the message as it is presented to the user.

The voice characteristic information discussed above may be as simple as a single bit indicating whether the sender is male or female. Alternately, the voice characteristic information may be more complex and capture more of the sender's voice characteristic information.

The sound of person's voice can be thought to be comprised of a plurality of voice characteristics. These voice characteristics can be captured in a number of different ways. The following paragraphs provide several examples of elements of a person's speech that characterize the sound of his or her voice.

The speed at which the sender speaks is one voice characteristic. The speaking speed can be determined by a number of factors, as will be appreciated by a person skilled in the art. For example, these factors may include the time it takes the sender to say a vowel, the time the sender rests between words, and the time the sender rests between sentences. These and other factors may be used either independently or combined together to determine a speed characteristic.

The frequency at which the sender speaks is another voice characteristic. Accordingly, a pitch of the sender's voice is determined. The level at which this voice characteristic is measured depends upon the implementation. That is, if it is sufficient to determine whether or not the voice is a male or female voice, then the frequency can be represented by a single bit and the user will be presented with either a generic male pitch or a generic female pitch for the voice.

Alternately, the pitch of the sender's voice may be encoded by a plurality of bits. Since more data is available to represent the pitch of the sender's voice, the system will be able to more closely mimic the actual pitch of the sender's voice when presenting the audio message to the user.

The volume at which the sender speaks is yet another voice characteristic. The overall volume at which the sender speaks can be defined by several variables including the general, or average, volume of the sender, the volume for a specific consonant or vowel, and the volume at, or just prior to, various types of punctuation.

As will be appreciated by a person of ordinary skill in the art, the above list is a small sample of possible ways of capturing voice characteristics.

In the present embodiment, the voice characteristic information is determined at the sender. The simplest method for selecting voice characteristic information allows the sender to select a voice from a list of at least two predefined voices. Preferably there is at least one male and one female voice from which to choose. The sender can then select the voice that they prefer most, but ideally they would select the voice that most accurately represents the sender's true voice.

If the set of predefined voices is common to all devices, then each of the predefined voices are assigned identifiers. The identifiers can be used by the user's device to identify the voice selected by the sender for presenting the message.

Alternately, if the set of predefined voices is not common to all devices, a series of differences, referred hereinafter to as voice deltas, are calculated with reference to a standard voice. The voice deltas can be used by the user's device to replicate the voice selected by the sender for presenting the message.

In an alternate embodiment, the sender is presented with a number of voice characteristic options. The sender can choose to set each of the voice characteristic options or leave them at a default value. Once the sender has set the desired voice characteristic options, a voice defined by the voice characteristic options is demonstrated to the sender using the sender's device.

If the sender is dissatisfied with the way the voice sounds, the sender can modify the voice characteristic options until the sender is satisfied. Once the sender is satisfied, the voice characteristic information can be used to represent the sender.

If the ability to interpret the voice characteristic options is common to all devices, then the values of the voice characteristic options can be sent to the user's device. The values can be used by the user's device to replicate the voice characteristic information defined by the sender for presenting the message.

Alternately, if the ability to interpret the voice characteristic options is not common to all devices, a series of voice deltas are calculated with reference to a standard voice for transmission to the user's device. The voice deltas can be used by the user's device to replicate the voice selected by the sender for presenting the message.

In yet an alternate embodiment, the sender's device is provided with a software application used to determine the sender's voice characteristics. The application prompts the user to speak a portion of text. The portion of text is preferably a predetermined phrase or paragraph, but it may also be a random phrase or paragraph selected by the sender. At present, a preferred phrase has not been established, however, a person skilled in the art will appreciate that the phrase should encapsulate the characteristics that are to be captured to facilitate accurate capture of the voice characteristics.

In the present embodiment, several voice characteristics are defined for the software to monitor. The voice characteristics used to define the sender's voice and which are monitored by the software include those described in detail above. Additional voice characteristics will become apparent to a person of ordinary skill in the art. Further, different embodiments may use various combinations of these voice characteristics as desired.

Similar to the previous embodiments, the voice characteristics can be transmitted to the user's device as either a set of voice characteristics or a series of voice deltas calculated between the spoken voice and a standard voice. The voice characteristics can be used by the user's device to replicate the voice monitored by the software for presenting the message.

In yet an alternate embodiment, the sender's device is provided with a software application used to monitor the sender's speech during conversation. This embodiment is particularly useful when the sender uses the device for other voice purposes, such as a cellular telephone or voice recorder. The software application monitors the sender's speech and dynamically adjusts the voice characteristics accordingly. When the sender transmits the message, the most recent version of the voice characteristics can be transmitted to the user's device as either a set of voice characteristics or a series of voice deltas calculated between the spoken voice and a standard voice. The voice characteristics can be used by the user's device to replicate the voice monitored by the software for presenting the message.

The voice characteristics of the sender will be transmitted along with the message. For email, the voice characteristic information can be embedded in a special header or digital signature. For instant messaging, the voice characteristic information can be embedded in the message header. Other transmission modes will be apparent to a person skilled in the art.

Yet further, the standard voice may be transmitted along with the voice characteristics when the voice characteristics are represents by voice deltas. This can be used to assure a consistent reference voice when the user's device attempts to mimic the sender's voice while presenting the message.

The user's device includes memory for storing the voice characteristic information associated with the sender of the text message and a processor for synthesizing an output voice in accordance with the voice characteristic information. The device further includes an output for audibly presenting the text message to the user using the output voice. Typically, the output is in the form of one or more speakers. However, the device may output the voice to an external device to audible output via a wired or wireless connection. For example, a smart phone with a Bluetooth^{™} connection used in a vehicle may output a signal to the vehicles audio system. The vehicle's audio system, in turn, outputs the voice using the vehicle's speaker system.

When the user chooses to listen to the message instead of reading it, the voice characteristic information transmitted along with the message is used to present the message. Depending upon the implementation the sender's voice is represented as a set of voice characteristic information or a series of voice deltas. The user's device uses the voice characteristic information to mimic the sender's voice and present the message to the user.

When presenting the message, the user's device may also utilize known text symbols to alter the voice characteristics during playback. For example, emoticons are a well-known form of representing emotions using icons. For example, a "smiley" is often represent as ":)". When a smiley is present in the text of the message, the tone of the voice can be altered to indicate they sender's emotion. As will be appreciated by a person skilled in the art, there are many possible emoticons that can used to represent a variety of emotions.

In all of the embodiments described above, the sender's voice characteristics are defined by the sender. In an alternate embodiment, the sender's voice characteristics may also be defined by the user. Therefore, if the sender does not, or cannot, define his or her voice characteristics, the user can still define certain voice characteristics to represent the sender.

In the present embodiment, the user can assign voice characteristic information to a sender identifier, such as an email address or instant message user identifier. Accordingly, when the user receives a message from a sender corresponding with the sender identifier, the voice characteristic information is used to present the message. Similar to the previous selection embodiments described, the user can select the voice characteristics in order to best represent the sender's voice.

Yet further, the user may have a software application on the user's device for analyzing a sender's voice. This can be applied, for example, if the user's device includes telephone functionality. In addition to the sender's email address, the sender identifier may also include information such as the sender's telephone numbers. When the user is on the phone, the sender may be identified by telephone, allowing the software to dynamically update the voice characteristics of the sender.

Although preferred embodiments of the invention have been described herein, it will be understood by those skilled in the art that variations may be made thereto without departing from the scope of the appended claims.

## Claims

1. A communication device (102) for audibly outputting a received text message to a user, the device (102) comprising:
means for retrieving data representing voice characteristic information associated with a sender of the text message, wherein the data representing the voice characteristic information defines the voice characteristic information as a set of voice deltas, each of the voice deltas representing a difference between a desired voice characteristic and a corresponding predefined voice characteristic of a standard voice;
a processor for synthesizing an output voice in accordance with the voice characteristic information; and
an output for audibly presenting the text message to the user using the output voice.

2. The communication device of claim 1, wherein the text message is an electronic mail message or an instant message.

3. A method of audibly outputting a received text message to a user via a communication device (102), the text message being received from a sender, the method comprising the steps of:
receiving a text message to present audibly;
retrieving an output voice to present the text message, the output voice being synthesized using predefined voice characteristic information to represent the sender's voice, the predefined voice characteristic information being determined by a set of voice deltas, each of the voice deltas representing a difference between a desired voice characteristic and a corresponding predefined voice characteristic of a standard voice; and
using the output voice to audibly present the text message to the user.

4. The method of claim 3, further comprising the step of selecting values for defining the voice characteristic information.

5. The method of claim 3 or claim 4, further comprising the step of automatically determining values for the predefined voice characteristic information.

6. The method of any one of claims 3 to 5, wherein the voice characteristic information is defined by the sender and transmitted to the user.

7. The method of claim 6, wherein the voice characteristic information is transmitted to the user along with the message.

8. The method of any one of claims 3 to 5, wherein the voice characteristic information is defined by the user.

9. The method of any one of claims 3 to 7, wherein the predefined voice characteristic of a standard voice is transmitted along with the voice deltas.

10. A computer readable medium comprising instruction means, which, when executed on a computer or a communication device (102), cause the computer or communication device to implement the method of any one of claims 3 to 9.

11. A communication system (100) comprising at least one communication device (102) according to claim 1 or claim 2.

## Patentansprüche

1. Kommunikationsvorrichtung (102) zur hörbaren Ausgabe einer empfangenen Textmitteilung an einen Benutzer, wobei die Vorrichtung (102) Folgendes umfasst:
Mittel zum Abrufen von Daten, die Sprachcharakteristikinformationen darstellen, die einem Sender der Textmitteilung zugeordnet sind, wobei die Daten, die die Sprachcharakteristikinformationen darstellen, die Sprachcharakteristikinformationen als eine Gruppe von Sprachdeltas definieren und jedes Sprachdelta eine Differenz zwischen einer gewünschten Sprachcharakteristik und einer entsprechenden vorherbestimmten Sprachcharakteristik einer Standardstimme darstellt;
einen Prozessor zum Synthetisieren einer Ausgabestimme gemäß den Sprachcharakteristikinformationen und
eine Ausgabevorrichtung, um dem Benutzer die Textmitteilung unter Verwendung der Ausgabestimme hörbar zu präsentieren.

2. Kommunikationsvorrichtung nach Anspruch 1, wobei die Textmitteilung eine E-Mail-Mitteilung oder eine Instant-Mitteilung ist.

3. Verfahren zur hörbaren Ausgabe einer empfangenen Textmitteilung an einen Benutzer mit Hilfe einer Kommunikationsvorrichtung (102), wobei die Textmitteilung von einem Sender empfangen wird und das Verfahren Folgende Schritte umfasst:
Empfangen einer Textmitteilung, die hörbar präsentiert werden soll;
Abrufen einer Ausgabestimme zur Präsentation der Textmitteilung, wobei die Ausgabestimme unter Verwendung vorherbestimmter Sprachcharakteristikinformationen synthetisiert wird, um die Stimme des Senders darzustellen, die vorherbestimmten Sprachcharakteristikinformationen durch eine Gruppe von Sprachdeltas bestimmt werden und jedes Sprachdelta eine Differenz zwischen einer gewünschten Sprachcharakteristik und einer entsprechenden vorherbestimmten Sprachcharakteristik einer Standardstimme darstellt; und
Verwenden der Ausgabestimme, um dem Benutzer die Textmitteilung hörbar zu präsentieren.

4. Verfahren nach Anspruch 3, das des Weiteren den Schritt der Auswahl von Werten zur Bestimmung der Sprachcharakteristikinformationen umfasst.

5. Verfahren nach Anspruch 3 oder Anspruch 4, das des Weiteren den Schritt der automatischen Bestimmung von Werten für die vorherbestimmten Sprachcharakteristikinformationen umfasst.

6. Verfahren nach einem der Ansprüche 3 bis 5, wobei die Sprachcharakteristikinformationen von dem Sender definiert werden und zum Benutzer übertragen werden.

7. Verfahren nach Anspruch 6, wobei die Sprachcharakteristikinformationen zusammen mit der Mitteilung zu dem Benutzer übertragen werden.

8. Verfahren nach einem der Ansprüche 3 bis 5, wobei die Sprachcharakteristikinformationen von dem Benutzer definiert werden.

9. Verfahren nach einem der Ansprüche 3 bis 7, wobei die vorherbestimmte Sprachcharakteristik einer Standardstimme zusammen mit den Sprachdeltas übertragen wird.

10. Computerlesbares Medium, das Befehlsmittel umfasst, die, wenn sie in einem Computer oder einer Kommunikationsvorrichtung (102) ausgeführt werden, den Computer oder die Kommunikationsvorrichtung veranlassen, das Verfahren nach einem der Ansprüche 3 bis 9 zu implementieren.

11. Kommunikationssystem (100), das mindestens eine Kommunikationsvorrichtung (102) nach Anspruch 1 oder Anspruch 2 umfasst.

## Revendications

1. Dispositif de communication (102) permettant de fournir à un utilisateur une sortie audible d'un message texte reçu, le dispositif (102) comprenant :
des moyens d'extraire des données représentant des informations de caractéristique vocale associées à un expéditeur du message texte, dans lesquels les données représentant des informations de caractéristique vocale définissent les informations de caractéristique vocale sous la forme d'un ensemble de deltas vocaux, chacun des deltas vocaux représentant une différence entre une caractéristique vocale souhaitée et une caractéristique vocale prédéfinie correspondante d'une voix standard ;
un processeur permettant de synthétiser un signal vocal sortant conformément aux informations de caractéristique vocale ; et
une sortie permettant de présenter le message texte de manière audible pour l'utilisateur, à l'aide du signal vocal sortant.

2. Dispositif de communication selon la revendication 1, dans lequel le message texte est un message de courrier électronique ou un message instantané.

3. Procédé permettant de fournir à un utilisateur une sortie audible d'un message texte reçu par l'intermédiaire d'un dispositif de communication (102), le message texte provenant d'un expéditeur, le procédé comprenant les étapes suivantes :
réception d'un message texte à présenter de manière audible ;
extraction d'un signal vocal sortant afin de présenter le message texte, le signal vocal sortant étant synthétisé à l'aide d'informations de caractéristique vocale prédéfinies afin de représenter la voix de l'expéditeur, les informations de caractéristique vocale prédéfinies étant déterminées par un ensemble de deltas vocaux, chacun des deltas vocaux représentant une différence entre une caractéristique vocale souhaitée et une caractéristique vocale prédéfinie correspondante d'une voix standard ; et
utilisation du signal vocal sortant pour présenter le message texte de manière audible pour l'utilisateur.

4. Procédé selon la revendication 3, comprenant en outre l'étape de sélection des valeurs permettant de définir les informations de caractéristique vocale.

5. Procédé selon la revendication 3 ou la revendication 4, comprenant en outre l'étape de détermination automatique des valeurs pour les informations de caractéristique vocale prédéfinies.

6. Procédé selon l'une quelconque des revendications 3 à 5, dans lequel les informations de caractéristique vocale sont définies par l'expéditeur et transmises à l'utilisateur.

7. Procédé selon la revendication 6, dans lequel les informations de caractéristique vocale sont transmises à l'utilisateur en même temps que le message.

8. Procédé selon l'une quelconque des revendications 3 à 5, dans lequel les informations de caractéristique vocale sont définies par l'utilisateur.

9. Procédé selon l'une quelconque des revendications 3 à 7, dans lequel la caractéristique vocale prédéfinie d'une voix standard est transmise en même temps que les deltas vocaux.

10. Support lisible par ordinateur comprenant des moyens d'instruction qui, lorsqu'ils sont exécutés sur un ordinateur ou un dispositif de communication (102), incitent l'ordinateur ou le dispositif de communication à mettre en oeuvre le procédé selon l'une quelconque des revendications 3 à 9.

11. Système de communication (100) comprenant au moins un dispositif de communication (102) selon la revendication 1 ou la revendication 2.
